# EUROPEAN PATENT SPECIFICATION

(11) **EP 3 526 020 B1**
(45) Date of publication and mention of the grant of the patent: **04.11.2020**
(21) Application number: 17791152.6
(22) Date of filing: 27.09.2017
(51) Int. Cl.: B29D 30/00

(54) **METHOD AND APPARATUS FOR HANDLING GREEN TYRES**
VERFAHREN UND VORRICHTUNG ZUR HANDHABUNG VON REIFENROHLINGEN
PROCÉDÉ ET APPAREIL DE MANIPULATION DE PNEUMATIQUES CRUS

(30) Priority: 11.10.2016 IT 201600101907
(43) Date of publication of application: 21.08.2019
(73) Proprietor: Pirelli Tyre S.p.A., 20126 Milano (IT)
(72) Inventor: MARCHINI, Maurizio, 20038 Seregno (Monza Brianza) (IT); BOSCAINO, Ivan Gildo, 20126 Milano (IT)
(74) Representative: Vittorangeli, Lucia
(86) International application number: PCT/IB2017/055904
(87) International publication number: WO 2018/069783

(56) References cited:
- WO-A1-2014/102677
- WO-A2-00/35665
- JP-A- 2002 326 721
- US-A- 4 252 241
- US-A- 4 618 303
- US-A1- 2010 072 648

## Description

The present invention relates to a method for handling green tyres. The present invention also relates to a plant for producing tyres in which the above method is implemented.

The production cycles of a tyre involve producing and/or assembling the various components of a tyre being processed in one or more building lines and subsequently subjecting the tyre being processed to a moulding and vulcanisation process adapted to define the structure of the tyre according to a desired geometry and tread pattern.

A tyre for vehicle wheels generally comprises a carcass structure comprising at least one carcass ply having respectively opposite end flaps engaged with respective annular anchoring structures, integrated in the areas usually identified by the name of "beads".

A crown structure is associated to the carcass structure, comprising a belt structure having one or more belt layers, arranged in radial superposition with respect to each other and with respect to the carcass ply, having textile or metallic reinforcing cords with crossed orientation and/or substantially parallel to the circumferential development direction of the tyre, and a tread band of elastomeric material, like other component semi-finished products of the tyre, in a position radially outer to the above belt structure.

Respective sides of elastomeric material are further applied in an axially outer position on the lateral surfaces of the carcass structure, each extending from one of the lateral edges of the tread band up at the respective annular anchoring structure to the beads.

After the building of the green tyre carried out by assembling respective semi-finished products, a moulding and vulcanisation treatment is generally carried out in order to determine the structural stabilisation of the tyre through cross-linking of the elastomeric material, as well as to impart a desired tread pattern on the tread band and to impart any distinguishing graphic signs at the sidewalls. To this end, the tyre is introduced into a mould to be vulcanised with a combined heating and pressing action, for example obtained by introducing steam under pressure into an expandable vulcanisation chamber engaged within the tyre itself.

The term "elastomeric material" is used to designate a composition comprising at least one elastomeric polymer and at least one reinforcement filler. Preferably, such composition further comprises additives such as, for example, a cross-linking agent and/or a plasticiser. Due to the presence of the cross-linking agent, such material can be cross-linked by heating so as to form the final manufactured article.

By "green tyre" it is meant a tyre obtained by the building process and not yet moulded and vulcanised.

By "vulcanisation line" it is meant a line comprising a plurality of vulcanisation moulds in which the green tyres are subjected to the vulcanisation and moulding treatment. Said plurality of moulds may comprise different sized moulds for the treatment of different models of tyres.

By "intermediate processing station" it is meant a station in which, at a predetermined frequency, the green tyres directed to a specific vulcanisation mould are brought. The treatment of the green tyre surface, preferably of the radially inner surface, is necessary to prevent problems of detachment between said expandable vulcanisation chamber and the radially inner surface of the tyre itself.

The term "lateral portion" of the tyre identifies an axially outer portion of the same, comprising at least the portion of a sidewall and/or a bead.

The term "attitude" means the orientation of a body in space. If equated with a rigid body, this can be identified for example using the coordinates of its centre of gravity and the three Euler angles.

The term "loading position" of the green tyre means a position obtained through the support of at least one lateral portion thereof within a loading basket.

The term "longitudinal axis" means an axis corresponding to the axis of rotation of the same tyre after being moulded and vulcanised.

The terms "horizontal", "vertical", "lower", "upper", "low", "high", "above" identify the relative position of an element, such as a component of a tyre, a tyre, an apparatus, a device, etc., with respect to the ground or of one of said elements with respect to another element. According to US2010/072648, during post-cure inflation of a vulcanized tire, the RRO value of the tire is measured and compared with a preset reference value. If the measured RRO value exceeds the reference value, a control signal is output to an apparatus for supplying a green tire to a vulcanizer.

Document WO 2014/102677, on behalf of the same Applicant, describes a plant comprising two building lines of green tyres, two storages and two vulcanisation lines, each comprising a plurality of vulcanisation moulds. A transfer device is provided for each vulcanisation line adapted to pick a selected green tyre coming from a storage and transfer it to the vulcanisation line.

The Applicant noted that in a plant such as that described in WO 2014/102677, the transfer device is movable between a plurality of vulcanisation moulds to ensure great flexibility and versatility in producing batches of limited amounts of different tyre models. The Applicant also noted that, in the presence of a large number of release points, the transfer device cannot ensure the perfect positioning of the green tyre in the loading basket interlocked to the respective vulcanisation mould or belonging to a different green tyre treatment station, causing an undesired inclination of the green tyre in said loading basket.

The loading basket generally has a frustoconical configuration with vertical axis of symmetry: at the end of the placement of the green tire thereon, the substantial lack of coincidence between the vertical axis of symmetry thereof and the one that at the end of the moulding and vulcanisation cycle will be the axis of rotation of the tyre determines the above undesired inclination.

This situation may arise because in a modern plant as that described above, the stroke line travelled by the transfer device is very long, moreover loads and speeds involved are such that even predetermining the positions of the loading baskets along the stroke line, the transfer device that carries the tyre often reaches them with small deviations. Moreover, during the deposition of the green tyre in the loading basket, the down stroke imparted to the green tyre will never be exactly vertical due to the inertia involved.

The Applicant thus verified that in the absence of specific controls, in order to achieve a substantial absence of inclination of the green tyre into the loading basket, processing accuracy and handling members would be required such as to not be compatible with the normal costs of a large structural plant of the type for producing tyres.

The Applicant also noted that over time, the conviction has rooted that this inclination can be recovered in a subsequent transfer step of the green tyre, for example using an adaptation of the green tyre due to its sliding on blades of a gripping device of the loading device of the vulcanisation moulds.

In fact, due to a non-optimal adjustment of the blade opening, the outer surfaces of the same blades may tend, during the opening, to interfere with the inside of the upper bead of the green tyre, thus preventing the downward sliding thereof. Moreover, the outer surface of the blades may be subject to rubberising that increases the friction with the inside of the upper bead, thus further preventing the green tyre from sliding downwards to recover the optimal position, i.e. substantially free from inclinations with respect to the horizontal.

In addition to the foregoing, the Applicant also noted that in a plant of the type described in WO 2014/102677, the inclination of the green tyre in the relative loading basket can be very high, resulting in a mechanical interference between the highest part of the portion of the upper bead of the green tyre and the loader blade. In particular, in opening the loader blades, one or more blades may pass beyond the upper bead or even position itself on top of the same, thus causing a gripping failure and a predictable loss of the green tyre during the subsequent handling steps.

The Applicant noted that these aspects have obvious impacts during vulcanisation and on the finished product, since the misplacement of the green tyre not recovered during the transfer happens again into the vulcanisation mould and, besides causing a discard of the tyre, it may damage the interior of the mould. Furthermore, also deviations from the correct position such as not to cause the discard of the tyre can cause a significant worsening of the performance of the same, giving rise to significant problems of quality of the finished product.

The Applicant thus perceived that in a plant with high automation and flexibility like the one described in WO 2014/102677, improving the release step of the green tyre in the corresponding loading basket by the transfer device may represent a critical step for maintaining the qualitative aspects of the finished product at the highest levels, also in a much more effective manner compared to possible improvements in the functionality and configuration of the instruments (such as the above gripping blades) used in the subsequent handling steps, steps which being subsequent would in any case often act on a positioning error already present.

The Applicant finally found that by controlling the attitude of the green tyre into the corresponding loading basket, the qualitative problems outlined above for subsequent processes, such as moulding and vulcanisation and/or treatment of the green tyre surface, are substantially solved. More precisely, the attitude is controlled by controlling the deposition step of the green tyre on the corresponding loading basket, i.e. by acting on the downward stroke of the green tyre controlled by the transfer device.

More precisely, according to a first aspect thereof, the invention relates to a method for handling a built green tyre for a subsequent process.

Preferably, said subsequent process comprises at least one of the following: moulding and vulcanisation; treatment of the green tyre surface.

Preferably, a loading position of the green tyre is obtained by supporting at least a lateral portion of the green tyre within a loading basket selected among a plurality of loading baskets.

Preferably, each loading basket has a frustoconical shape and has a vertical axis of symmetry.

Preferably, it is contemplated to arrange said green tyre in a transfer device comprising a gripping device, for transferring it to said selected loading basket.

Preferably, it is contemplated to handle said gripping device along a predetermined stroke line in which said gripping device carrying said green tyre, with a longitudinal axis thereof arranged vertically, is handled along a first horizontal axis up to a predetermined transfer position overlying the selected loading basket at a predetermined height with respect to it.

Preferably, it is contemplated to command the handling of said gripping device according to a vertical axis by performing a downward stroke towards said selected loading basket from said predetermined transfer position.

Preferably, it is contemplated to control said downward stroke by adjusting a deviation between the longitudinal axis of the green tyre and the vertical axis of symmetry of said selected loading basket to obtain a controlled attitude of said green tyre in said loading position at the end of said controlled downward stroke in which said deviation is lower than a predetermined maximum threshold value.

Preferably, it is contemplated to perform such subsequent process(es) while maintaining said controlled attitude.

The Applicant believes that by controlling the deposition step of the green tyre on the corresponding loading basket, it is possible to control the attitude thereof and solve the quality problems of subsequent processes.

According to a second aspect thereof, the invention relates to a plant for producing tyres comprising an apparatus for handling built green tyres; at least one storage of green tyres; at least one of the following: a moulding and vulcanisation line; an intermediate working station for the treatment of the green tyre surface; and a plurality of loading baskets, each loading basket of said plurality of loading baskets being associated with the moulding and vulcanisation line or with the intermediate working station.

Preferably, said device comprises a transfer device comprising a gripping device for transferring each green tyre to a selected loading basket between said plurality of loading baskets, each loading basket having frustoconical shape and having a vertical axis of symmetry.

Preferably, said green tyre transferred in said selected loading basket and resting therein at at least a lateral portion thereof, defines a loading position of the green tyre.

Preferably, said gripping device is configured for retaining said green tyre with a longitudinal axis thereof arranged vertically, and for releasing it by depositing it in said selected loading basket.

Preferably, said apparatus comprises a control unit.

Preferably, said control unit is programmed for handling said gripping device along a predetermined stroke line along a first horizontal axis up to reaching a predetermined transfer position overlying the selected loading basket at a predetermined height with respect to it.

Preferably, said control unit is programmed for commanding the handling of said gripping device according to a vertical axis by performing a downward stroke towards said selected loading basket from said predetermined transfer position.

Preferably, said control unit is programmed for controlling said downward stroke by adjusting a deviation between the longitudinal axis of the green tyre and the vertical axis of symmetry of said selected loading basket to obtain a controlled attitude of said green tyre in said loading position at the end of said controlled downward stroke in which said deviation is lower than a predetermined maximum threshold value.

The Applicant believes that by providing a specially programmed control unit, it is possible to achieve an optimum centring of the green tyre with respect to the loading basket and thus subsequently in the vulcanisation mould, thus solving the problems above.

The present invention, in at least one of the above aspects thereof, can exhibit at least one of the following preferred features.

Preferably, the action of controlling said downward stroke comprises detecting said horizontal deviation.

Preferably, the action of controlling said downward stroke comprises comparing said horizontal deviation detected with said maximum threshold value.

Preferably, the action of controlling said downward stroke comprises performing an adjustment stroke of said gripping device along at least one horizontal axis if the horizontal deviation detected is greater than said maximum threshold value, in order to reduce the horizontal deviation detected.

The Applicant believes that the detection of the horizontal deviation and the adjustment of the position of the gripping device with respect to the loading basket allow achieving the centring of the green tyre with respect to the same loading basket and safely automating all the production steps, substantially eliminating the discards related to the non-centring of the green tyre inside the mould and ensuring the maintenance of the working time.

Preferably, the action of detecting said horizontal deviation is carried out by using a lower reference that identifies said vertical axis of symmetry of the selected loading basket and an upper reference carried by said gripping device and arranged so as to define said longitudinal axis (A) of the green tyre.

Preferably, the actions of detecting the horizontal deviation and comparing the horizontal deviation detected and the maximum threshold value of the horizontal deviation are repeated. More preferably, they are carried out with a frequency of between about 10 Hz and about 100 Hz. Even more preferably, they are carried out with a frequency of between about 20 Hz and about 50 Hz.

Preferably, it is contemplated to repeat the action of performing an adjustment stroke of said gripping device along at least one horizontal axis following each detection and comparison if the horizontal deviation detected is greater than said maximum threshold value.

The Applicant believes that the controlled attitude of the green tyre with respect to the loading basket can be achieved by measured detections and comparisons to optimise the adjustment stroke.

Preferably, said adjustment stroke is performed along said first horizontal axis.

The Applicant believes that performing the adjustment stroke along the same horizontal handling axis allows optimising the means used.

Preferably, said adjustment stroke is performed along a second horizontal axis transverse to the first horizontal axis.

More preferably, said second horizontal axis is perpendicular to the first horizontal axis.

The Applicant believes that performing the adjustment stroke along a further horizontal axis with respect to the horizontal handling axis allows optimising the achievement of the controlled attitude in the loading position.

Preferably, the horizontal deviation is detected during a slowing down or stopping step of the gripping device along the downward stroke.

The Applicant believes that slowing or stopping the gripping device to perform the detection ensures the result thereof and allows using slowing and/or stopping steps which may be necessary for additional types of actions.

Preferably, the horizontal deviation is detected starting from a predetermined height with respect to the selected loading basket.

The Applicant believes that activating the detection starting from a predetermined height ensures the optimal functioning of the means used for the detection, such as reference elements and detection devices.

Preferably, it is contemplated to:
i) automatically performing said subsequent process(es) after reaching said controlled attitude in said loading position, or
ii) generating an incorrect attitude signal as a result of the failure to achieve said controlled attitude in said loading position.

Preferably, action i) comprises automatically loading the green tyre from said loading position in a respective vulcanisation mould or automatically activating said treatment of the surface of the green tyre.

The Applicant believes that the automatic loading and the automatic activation simplify the plant control.

Preferably, said incorrect attitude signal inhibits action i).

Preferably, said incorrect attitude signal activates an incorrect attitude alarm.

The Applicant believes that providing an incorrect attitude signal allows automating the operations, intervening only if the adjustment stroke, even repeated, is not be able to ensure the controlled attitude of the tyre in the loading position.

Preferably, said upper reference comprises a detection device integral with the gripping device.

Preferably, said lower reference comprises a reference element integral with each loading basket and detectable by said detection device.

Preferably, detecting the horizontal deviation comprises activating said detection device for detecting said reference element.

The Applicant believes that the use of detection devices simplifies the detection of the horizontal deviation and makes it reliable.

Preferably, it is contemplated to detect the availability of a vulcanisation mould in a moulding and vulcanisation line.

Preferably, it is contemplated to select a green tyre in at least one green tyre storage adapted to the vulcanisation mould available.

Preferably, it is contemplated to arrange said selected green tyre for the transfer device.

The Applicant believes that providing the green tyres depending on the availability of the vulcanisation mould reduces the processing time.

Preferably, said subsequent processes include in a sequence said treatment of the green tyre surface and said moulding and vulcanisation.

Preferably, said treatment of the green tyre surface takes place in an intermediate working station for the treatment of the surface of the green tyre comprising said selected loading basket.

Preferably, it is contemplated to grip said green tyre subjected to said surface treatment by means of said gripping device.

Preferably, it is contemplated to select a further loading basket associated with a respective vulcanisation mould.

Preferably, it is contemplated to handle said gripping device along said predetermined stroke line in which said gripping device carrying said green tyre, with a longitudinal axis thereof arranged vertically, is handled along said first horizontal axis up to a predetermined transfer position overlying the further loading basket at a predetermined height with respect to it.

Preferably, it is contemplated to command the handling of said gripping device according to a vertical axis by performing a downward stroke towards said further loading basket from said predetermined transfer position.

Preferably, it is contemplated to control said downward stroke by adjusting said deviation between the longitudinal axis of the green tyre and the vertical axis of symmetry of said further loading basket to obtain said controlled attitude of said green tyre in a further loading position at the end of said controlled downward stroke in which said deviation is lower than a predetermined maximum threshold value.

Preferably, it is contemplated to automatically load the green tyre from said further loading position in a respective vulcanisation mould and perform said moulding and vulcanisation while maintaining said controlled attitude.

Preferably, after a predetermined downward interval of said controlled downward stroke, it is contemplated to deposit the green tyre in the selected loading basket irrespective of having reached said controlled attitude.

The Applicant believes that the completion of the tyre transfer operations irrespective of the attitude obtained in the loading position allows not affecting the upstream processing lines.

Preferably, said moulding and vulcanisation line comprises a plurality of vulcanisation moulds wherein each vulcanisation mould is associated with a respective loading basket of said plurality of loading baskets.

Preferably, said control unit is programmed during the action of controlling said downward stroke to detect said horizontal deviation.

Preferably, said control unit is programmed during the action of controlling said downward stroke to compare the horizontal deviation detected with said maximum threshold value.

Preferably, said control unit is programmed during the action of controlling said downward stroke for activating an adjustment stroke of said gripping device along at least one horizontal axis if the horizontal deviation detected is greater than said maximum threshold value, in order to reduce the horizontal deviation detected.

Preferably, a lower reference is provided, associated with each loading basket so as to define said vertical axis of symmetry. Preferably, an upper reference is provided, carried by said gripping device and arranged so as to define said longitudinal axis of the green tyre.

Preferably, said control unit is programmed for detecting said horizontal deviation by using the lower reference of the selected loading basket and said upper reference.

Preferably, said control unit is programmed for repeating the detection of the horizontal deviation and the comparison between the detected horizontal deviation and the maximum threshold value with a frequency of between about 10 Hz and about 100 Hz, even more preferably with a frequency of between about 20 Hz and about 50 Hz.

Preferably, said control unit is programmed for activating an adjustment stroke as a result of each detection and comparison if the horizontal deviation detected is greater than said maximum threshold value.

The Applicant believes that the controlled attitude of the green tyre with respect to the loading position can be achieved by measured detections and comparisons to optimise the adjustment stroke.

Preferably, said transfer device comprises at least one actuator configured for performing said downward stroke towards the selected loading basket.

Preferably, said control unit is programmed for slowing or stopping said at least one actuator during said downward stroke to detect said horizontal deviation.

The Applicant believes that slowing or stopping the gripping device to perform the detection ensures the result thereof and allows using slowing and/or stopping steps which may be necessary for additional types of actions.

Preferably, a vertical position detector is provided, configured for detecting the height of the green tyre retained by the gripping device with respect to the selected loading basket.

More preferably, said control unit is programmed for detecting the horizontal deviation starting from a predetermined height with respect to the selected loading basket.

The Applicant believes that activating the detection starting from a predetermined height ensures the optimal functioning of the means used for the detection, such as reference elements and detection devices.

Preferably, said upper reference comprises a detection device integral with the gripping device.

Preferably, said lower reference comprises a reference element integral with each loading basket and detectable by said detection device.

More preferably, said detection device comprises a camera.

The Applicant believes that the use of detection devices simplifies the detection of the horizontal deviation and makes it reliable.

Preferably, said gripping device comprises a plurality of blades arranged circumferentially.

More preferably, said detection device is arranged along the axis of substantial vertical symmetry of said gripping device.

Preferably, the detection device is arranged so that a detection field of the detection device itself is facing downwards.

The Applicant believes that such arrangement prevents dust and impurities from affecting the quality of detection.

Preferably, a lighting device is provided, having annular shape and arranged around the detection device.

The Applicant believes that such arrangement optimises the space within the gripping device.

Preferably, said transfer device comprises a first slide and a straight guide extending along the loading baskets, wherein said first straight guide defines said predetermined stroke line along said first horizontal axis and wherein said first slide is slidably mounted on said straight guide.

Preferably, said transfer device comprises a second slide to which the gripping device of the green tyre is associated, wherein said second slide is integral with the first slide in the movement along the first horizontal axis and is mounted on the first slide to be vertically movable with respect thereto along a vertical axis.

Preferably, said transfer device comprises adjustment actuators configured to generate an adjustment stroke of the gripping device on a second horizontal axis transverse to the first horizontal axis.

More preferably, said second horizontal axis is perpendicular to the first horizontal axis.

Preferably, said intermediate working station comprises a loading basket configured to allow the treatment of the surface of the green tyre when this is in said loading position.

Preferably, said straight guide extends along said plurality of loading baskets up to the interior of said intermediate working station.

Further features and advantages of the invention will become apparent from the following description of a method for handling green tyres and a plant for producing tyres implementing such a method.

Such description is given hereinafter with reference to the accompanying drawings, provided only for illustrative and, therefore, non-limiting purposes, in which:
- figure 1 shows a schematic layout of a plant according to the invention;
- figure 2 shows an enlarged detail of figure 1 with some parts omitted in order to highlight others;
- figure 3 shows a schematic front view of an apparatus belonging to the plant according to the present invention.

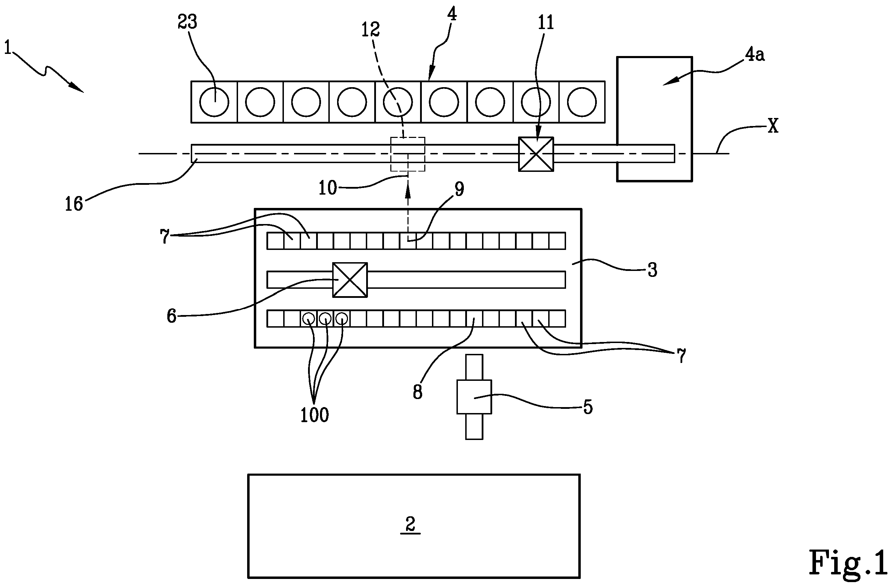

With reference to the accompanying figure 1, reference numeral 1 designates as a whole a plant according to the invention, hereinafter referred to as plant 1.

Plant 1 (figure 1) comprises a building line 2 of green tyres 100, a storage 3 of green tyres 100, a vulcanisation line 4 and an intermediate processing station 4a.

According to different embodiments, plant 1 may comprise two or more building lines, two or more storages and two or more vulcanisation lines.

A conveyor 5 is arranged between the building line 2 and storage 3, configured for picking the green tyres 100 in output from the building line and delivering them to storage 3. Conveyor 5 may be implemented by an industrial robot, for example an anthropomorphic robot arm, preferably with six or more handling axes.

According to a possible embodiment, storage 3 may comprise a handling device 6 configured for moving the green tyres inside the storage itself, for example between a plurality of predefined locations 7.

Preferably, storage 3 comprises a predefined inlet location 8 defining a fixed location in which the green tyres coming from the building line 2 enter storage 3. For example, the predefined inlet location 8 constitutes the fixed release position for conveyor 5.

Preferably, the storage comprises a predefined outlet location 9 defining a fixed location from which the green tyres exit storage 3. For example, the predefined outlet location 9 constitutes the fixed picking position for a shuttle, not shown, movable along a trajectory 10.

Reference numeral 11 denotes a transfer device belonging to an apparatus for handling built green tyres 100. The transfer device 11 is configured for receiving the green tyres 100 coming from storage 3 and releasing them to the vulcanisation line 4 or to the intermediate processing station 4a. If the transfer device 11 releases the green tyres 100 coming from storage 3 to the intermediate processing station 4a, the same transfer device 11 may be configured for again picking the green tyres 100 from the intermediate processing station 4a to release them to the vulcanisation line 4, as will be described hereinafter.

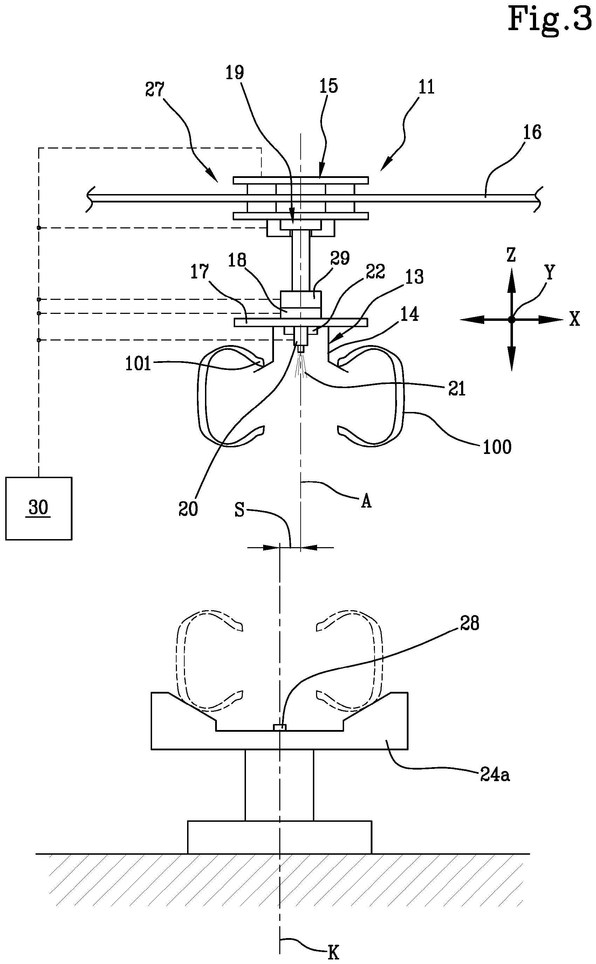

In particular, as for example shown in figure 3, the transfer device 11 is configured for retaining, with a longitudinal axis "A" thereof arranged vertically, a green tyre 100 coming from storage 3. Preferably, the transfer device 11 is configured for receiving, at a predefined picking position 12, the green tyres 100 transported by the movable shuttle along trajectory 10.

According to a possible embodiment, the transfer device 11 comprises a gripping device 13, for example comprising a plurality of blades 14 arranged circumferentially and configured for radially fitting below an upper bead 101 of the green tyre 100, so as to maintain the upper bead 101 resting on the blades themselves.

The gripping device 13 is movable on a predetermined stroke line along at least one horizontal axis "X". In addition, the gripping device 13 is movable along a vertical axis "Z". As a result of the movement along the horizontal axis "X", at least one handling stroke is performed along the stroke line and optionally an adjustment stroke. As a result of the movement along the vertical axis "Z", a downward stroke is performed. Preferably, the gripping device 13 is also movable along a second horizontal axis "Y" transverse, preferably perpendicular, to the first horizontal axis "X". As a result of the movement along the vertical axis "Z", a downward stroke is performed. As a result of the movement along the second horizontal axis "Y", an adjustment stroke is performed. According to a possible embodiment not shown, as a result of the movement along the second horizontal axis "Y", a further handling stroke may also be performed along the horizontal.

For example, the transfer device 11 is made as a gantry transfer device. Preferably, the transfer device 11 comprises a first slide 15 and a straight guide 16 defining the first horizontal axis "X". The first slide 15 is slidably mounted on the straight guide 16 along the first horizontal axis "X". Actuators, not shown, are configured for moving the first slide 15 along the first horizontal axis "X" and in particular to perform a handling stroke along the horizontal.

A second slide 17 of the transfer device 11 is associated with the gripping device 13. The second slide 17 is integral with the first slide 15 in the movement along the first horizontal axis "X" and is mounted on the first slide 15 to be vertically movable with respect thereto along the vertical axis "Z". At least one actuator 18 is configured for moving the second slide 17 along the vertical axis "Z" to perform the downward stroke.

If the gripping device 13 is also movable along the second horizontal axis "Y", adjustment actuators 19 may be provided, configured for generating the adjustment stroke of the gripping device 13 on the second horizontal axis "Y". According to a possible embodiment for example schematically shown in figure 3, the adjustment actuators 19 are interposed between the first slide 15 and the second slide 17. Alternatively, they may be arranged between the second slide 17 and the gripping device 13 or between the first slide 15 and the straight guide 16 or according to further different configurations.

Reference numeral 20 denotes an upper reference carried by the gripping device 13 and preferably arranged so as to define the longitudinal axis "A" of the green tyre retained by the same gripping device 13. Preferably, the upper reference 20 comprises a detection device integral with the gripping device 13 so that a detection field 21 of the detection device 21 is facing downwards.

Preferably, the detection device is an image detection device, such as a camera. The detection device, in particular in the case of a camera, can operate at a reading frequency of up to 150 images per second.

According to a possible embodiment of which the accompanying drawings are a non-limiting example, the upper reference 20 and in particular the detection device is arranged substantially along a vertical axis of symmetry of the gripping device 13 corresponding to the longitudinal axis "A" of the green tyre retained by the same gripping device 13.

Preferably, the detection device 20 is associated with a lighting device 22, for example having annular shape and arranged around the detection device 20.

Within the vulcanisation line 4, reference numeral 23 designates a vulcanisation mould of a plurality of vulcanisation moulds forming the vulcanisation line itself.

Each vulcanisation mould 23 is associated with a respective loading basket 24 adapted to receive a green tyre 100 with the longitudinal axis "A" thereof arranged vertically.

Each loading basket 24 has a truncated cone configuration with minor base facing downwards and has a vertical axis of symmetry "K".

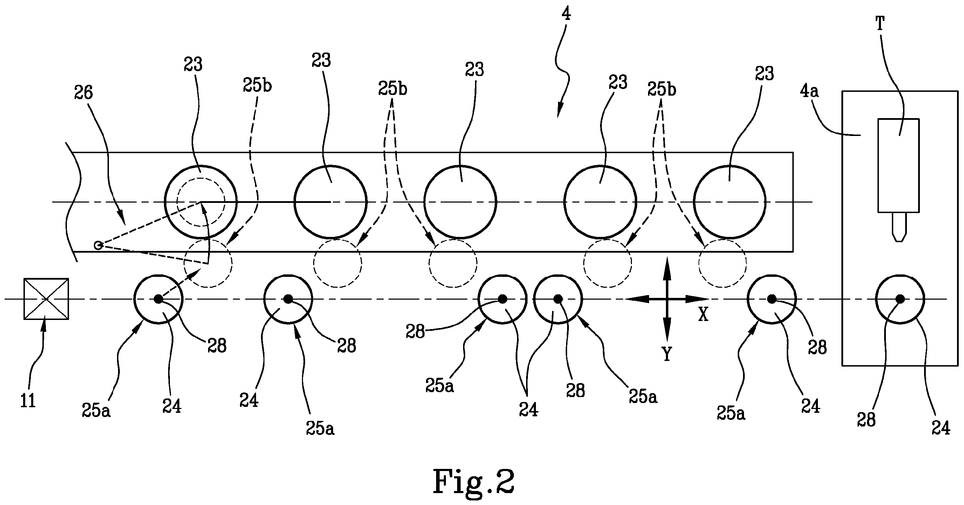

According to a possible embodiment of which the accompanying drawings are a non-limiting example, each loading basket 24 of the vulcanisation line 4 is movable between a reception position 25a of the green tyre, shown with a solid line in figure 2, and an operating position 25b, shown with a dotted line in the same figure 2. Each vulcanisation mould comprises a loader 26, shown in figure 2 only with reference to a vulcanisation mould, configured for picking the green tyre 100 from the loading basket 24 arranged in the operating position 25b and placing it inside the vulcanisation mould 23.

According to a possible embodiment, it is contemplated that, at predetermined intervals, a selected green tyre for a vulcanisation mould undergoes, before vulcanisation, a subsequent process in the intermediate working station 4a. Such subsequent process may for example comprise a surface treatment of the green tyre in which a treatment substance is applied on the radially inner surface thereof, in particular comprising lubricant/detaching agents, adapted to improve the interaction between the green tyre and the vulcanisation chamber during the vulcanisation and moulding process.

The intermediate working station 4a comprises a treatment device "T" adapted to apply the treatment substance on the radially inner surface of the green tyre. Also the intermediate working station 4a, as for example shown in figure 2, comprises a loading basket 24 totally identical to those described above with reference to the vulcanisation line 4, therefore also adapted to receive a green tyre 100 with the longitudinal axis "A" thereof arranged vertically.

The set of loading baskets 24 of the vulcanisation line 4 and of the intermediate working station 4a defines a plurality of loading baskets 24 of plant 1.

According to an embodiment, the loading baskets 24 are arranged along the predetermined stroke line of the gripping device 13, preferably along the first horizontal axis "X", even more preferably along the straight guide 16. In particular, the straight guide 16 extends along the loading baskets 24 of the vulcanisation line 4 and preferably up to the loading basket 24 present in the intermediate working station 4a, and then up inside the intermediate working station itself.

Whenever a green tyre 100 rests at least a lateral portion thereof on a loading basket 24 associated with a vulcanisation mould 23 or on the loading basket 24 of the intermediate working station 4a, such a green tyre 100 reaches its loading position.

In such a loading position, the green tyre 100 has its own attitude which is retained during subsequent processes, such as moulding and vulcanisation or treatment of the radially inner surface thereof, as will be described hereinafter.

The gripping device 13 is configured for releasing, in a selected loading basket 24a among the plurality of loading baskets 24 (figure 3), a green tyre 100, in particular a green tyre 100 coming from storage 3. In figure 3, the green tyre 100 retained by the gripping device 13 is shown with a solid line while the green tyre 100 released in the selected loading basket 24a in the loading position thereof is shown with a dotted line.

In particular, the gripping device 13 is configured for being moved according to the vertical axis "Z" by performing the downward stroke from a predetermined transfer position 27 overlying the selected loading basket 24a arranged at a certain height with respect thereto.

Preferably, at least one actuator 18 is configured for performing the downward stroke towards the selected loading basket 24a so as to deposit the green tyre 100 thereon.

The gripping device 13 may be handled in the same way starting from a predetermined transfer position 27 overlying the selected loading basket 24a of the vulcanisation line 4 or the intermediate working station 4a.

Reference numeral 28 denotes a lower reference associated with each loading basket 24, said lower reference 28 defines the vertical axis of symmetry "K" of the loading basket 24. Preferably, the lower reference 28 comprises a reference element or target integral with each loading basket 24 and detectable by the detection device 20, in particular by the camera.

According to a possible embodiment, for example comprising the detection device arranged coaxially to the vertical axis of symmetry of the gripping device 13, also the reference element of the loading basket is arranged coaxially to the axis of symmetry of each loading basket 24.

According to a possible embodiment of which the accompanying drawings represent a non-limiting example, a vertical position detector 29 is provided (implemented, for example, using an encoder), configured for detecting the height of the selected green tyre 100 retained by the gripping device 13, with respect to the selected loading basket 24a.

The apparatus for handling built green tyres further comprises a control unit 30 programmed for handling the gripping device 13 along the predetermined stroke line along the first horizontal axis "X" up to reaching the predetermined transfer position 27 overlying the selected loading basket 24a at a predetermined height with respect to it.

The control unit 30 is also programmed for controlling the handling of the gripping device 13 according to the vertical axis "Z" by performing the downward stroke from the predetermined transfer position 27, so that on reaching the loading position, a horizontal deviation "S" between the longitudinal axis "A" and the vertical axis of symmetry of the selected loading basket 24a is lower than a predetermined value, so as to obtain a controlled attitude according to the specifications of the green tyre 100 in the loading position, a controlled attitude which will be retained during subsequent processes (e.g.: moulding and vulcanisation, surface treatment).

More specifically, the control unit 30 is programmed for adjusting the deviation "S" in order to obtain the above controlled attitude. Even more precisely, the control unit 30 is programmed for detecting the possible horizontal deviation "S" between the longitudinal axis "A" and the vertical axis of symmetry "K" of said selected loading basket 24a, preferably using said lower reference 28 and upper reference 20; comparing the detected horizontal deviation with a maximum threshold value of the horizontal deviation; activating an adjustment stroke of the gripping device along at least one horizontal axis if the horizontal deviation detected is greater than the maximum threshold value in order to reduce the horizontal deviation detected. Said horizontal deviation "S" is variable according to the type of equipment used, and is generally of between about 1 mm and about 20 mm.

Preferably, the maximum threshold value is of between about 0 mm and about 5 mm, more preferably is between about 0 mm and about 3 mm.

The control unit 30 is further programmed for repeating the detection of the horizontal deviation and the comparison between the detected horizontal deviation and the maximum threshold value before depositing the green tyre 100 in the selected loading basket 24a. Moreover, the control unit 30 is programmed for activating an adjustment stroke as a result of each detection and comparison if the horizontal deviation detected is greater than the maximum threshold value.

Preferably, the control unit 30 may carry out such a detection and comparison with a frequency of between about 1 Hz and about 500 Hz.

If at least one actuator 18 is provided, configured for carrying out the downward stroke towards the selected loading basket 24a, the control unit 30 is programmed for slowing or stopping said at least one actuator 18 for detecting the horizontal deviation between the lower reference 28 and the upper reference 20 during the slowing or stopping of the downward stroke. Advantageously, the slowing of the downward stroke also allows dampening any oscillations in the set consisting of the gripping device 13 and the green tyre 100 retained thereby, especially around axes X and Y (perpendicular to axis "X") as defined above and visible in figure 3 (axis "Y" is perpendicular to the plane of the sheet identified by axes "X" and "Z"), said possible oscillations are more precisely reduced to non-significant values for the measurements in progress relating to the detection of the horizontal deviation "S".

If said vertical position detector 29 is provided, the control unit 30 is programmed for detecting the horizontal deviation starting from a predetermined height with respect to the selected loading basket 24a.

In addition to the foregoing, the control unit 30 is programmed for performing the actions associated with the release of the green tyre in the selected loading basket 24a, which will be described hereinafter with reference to the method for handling green tyres according to the present invention.

In addition, the control unit 30 is programmed for operating in a similar manner with reference to the loading baskets 24 associated with vulcanisers 23 of the vulcanisation line 4 and with the loading basket of the intermediate working station 4a.

In use, plant 1 is adapted to implement the above method for handling green tyres according to the present invention.

Preferably, but not limited to, plant 1 is intended for the production of batches of limited amounts of different tyre models.

The green tyres are built in the building line 2 and transferred to storage 3 by conveyor 5.

Inside the storage, the tyres are put on hold and can be variously handled by the handling device 6 and be provided to the predefined outlet station 9 to be picked by the transfer device 11.

For example, it is possible to detect the availability of a vulcanisation mould 23 and select a green tyre 100 in storage 3, adapted for the available vulcanisation mould. In this case, such a green tyre is provided in one of the predefined transfer positions 27, possibly after having been provided in the predefined transfer position 27 of the intermediate working station 4a. As described above, in the transfer position 27, the selected green tyre is above the selected loading basket 24a at a predetermined height with respect thereto and is retained by the gripping device 13 with the longitudinal axis "A" thereof arranged vertically and substantially coaxial to the vertical axis of symmetry of the gripping device 13.

Hereinafter, reference is made to the release of the green tyre in the selected loading basket 24a associated with a vulcanisation mould 23.

As for example shown in figure 3, the gripping device 13 is handled according to the vertical axis "Z" by performing the downward stroke starting from the predetermined transfer position 27.

Preferably, along the downward stroke, it is contemplated to detect the horizontal deviation "S" between the lower reference 28 associated with the selected loading basket 24a identifying the vertical axis of symmetry of the latter and the upper reference 20 carried by the gripping device 13 coaxial to the vertical symmetry axis thereof. Moreover, it is contemplated to compare the detected horizontal deviation with a maximum threshold value of the horizontal deviation. If the horizontal deviation detected is greater than the maximum threshold value, an adjustment stroke of the gripping device 13 is carried out along at least one horizontal axis. Such an adjustment stroke is carried out so as to reduce the horizontal deviation detected.

The release of the selected green tyre ends with the deposition thereof in the selected loading basket 24a (dotted line in figure 3), by resting at least one lateral portion thereof on the selected loading basket 24a and obtaining said loading position 100 in which the green tyre has a controlled attitude according to the specifications.

The horizontal deviation "S" can be detected while the gripping device 13 is in motion, preferably during a descent slowdown step, or while the gripping device 13 is stationary, i.e. during a stopping step of the descent of the gripping device 13.

The horizontal deviation "S" can be detected from a certain height with respect to the selected loading basket 24a, for example as a result of the reading carried out by the vertical position detector 29.

The detection of the horizontal deviation "S" and the comparison with the maximum threshold value may be repeated several times before depositing the green tyre in the selected loading basket 24a, for example with a frequency of between about 10 Hz and about 100 Hz, more preferably between about 20 Hz and about 50 Hz, linked to the reading frequency of the detection device 20 and/or to a reading frequency set by the control unit 30.

In this case, also the execution of the adjustment stroke is repeated, following each detection and comparison in which the horizontal deviation detected is greater than the maximum threshold value.

If the upper reference 20 includes the detection device, the detection of the horizontal deviation comprises the activation of the detection device for detecting the reference element associated with the selected loading basket 24a. If the detection device is arranged coaxial with the vertical axis of symmetry of the gripping member 13 (carrying the green tyre 100 with the longitudinal axis "A" thereof coaxial to said vertical axis of symmetry) and the reference element is arranged coaxial to the vertical axis of symmetry of the selected loading basket 24a, the detection of the horizontal deviation in fact provides for detecting the distance between said axes of symmetry.

According to a possible embodiment, after a predetermined descent interval, it is contemplated to still deposit the green tyre in the selected loading basket 24a irrespective of whether the controlled attitude has been achieved.

For example, after the predetermined decent interval, the control unit 30 controls the gripping device 13 in such a way that it releases the green tyre on the selected loading basket 24a.

Following the deposition of the green tyre in the selected loading basket 24a, the subsequent process(es) is/are performed automatically if the controlled attitude in the loading position has been achieved. For example, the automatic loading of the corresponding vulcanisation mould 4 or the automatic activation of the surface treatment of the green tyre may be contemplated. The automatic execution of said subsequent processes is instead inhibited generating an incorrect attitude signal as a result of the failure to achieve the controlled attitude in the loading position. In addition or alternatively to inhibiting said automatic execution, it may be contemplated that the incorrect attitude signal activates an incorrect attitude alarm. In both cases, the attitude of the green tyre in the selected loading basket 24a is corrected by means of alternative interventions, for example by manual intervention.

In order to reach the predetermined transfer position 27 overlying the selected loading basket 24a, in particular in the case of the transfer device 11 described above, it is contemplated to follow a stroke line in which said gripping device 13 is handled along the first horizontal axis "X". In this case, the adjustment stroke may be carried out along said first horizontal axis "X".

If the transfer device 11 is suitable for handling the gripping device 13 along the second axis "Y", the adjustment stroke may also be performed along said second horizontal axis "Y".

If the intermediate working station 4a is provided, before releasing the selected green tyre in a loading basket 24 associated with a vulcanisation mould 23, it may be contemplated, at predetermined intervals with respect to said vulcanisation mould 23, to release the selected green tyre 100 in the loading basket 24 belonging to the intermediate working station 4a to be subjected to subsequent process.

In this case, the selected green tyre 100, retained by the gripping device 13 with the longitudinal axis "A" thereof arranged vertically, is provided in the predetermined transfer position 27 within the intermediate working station 4a overlying what becomes the selected loading basket 24a at a given height with respect thereto. The gripping device 13 is handled according to the vertical axis "Z" by performing the downward stroke similar to what described above.

All the actions described above are performed in a similar manner.

Finally, the selected green tyre 100 is subjected to subsequent process (the treatment of the radially inner surface thereof) in the intermediate working station 4a and subsequently picked up by the same gripping device 13 to be released into the selected loading basket 24a associated with a vulcanisation mould 23, performing the actions described above.

## Claims

1. Method for handling a built green tyre (100) for a subsequent process, said subsequent process comprising at least one of the following:
moulding and vulcanisation;
treatment of the green tyre surface;
wherein a loading position of the green tyre is obtained by supporting at least a lateral portion of the green tyre within a selected loading basket (24a) between a plurality of loading baskets (24), each loading basket (24) having frustoconical shape and having a vertical axis of symmetry (K);
said method comprising:
- arranging said green tyre (100) in a transfer device (11) comprising a gripping device (13), for transferring it to said selected loading basket (24a);
- handling said gripping device (13) along a predetermined stroke line in which said gripping device (13) carrying said green tyre (100), with a longitudinal axis (A) thereof arranged vertically, is handled along a first horizontal axis (X) up to a predetermined transfer position (27) overlying the selected loading basket (24a) at a predetermined height with respect to it;
- handling said gripping device (13) according to a vertical axis (Z) by performing a downward stroke towards said selected loading basket (24a) from said predetermined transfer position (27); **characterised by**
- controlling said downward stroke by adjusting a deviation (S) between the longitudinal axis (A) of the green tyre and the vertical axis of symmetry of said selected loading basket (24a) to obtain a controlled attitude of said green tyre in said loading position at the end of said controlled downward stroke in which said deviation (S) is lower than a predetermined maximum threshold value;
- performing such subsequent process(es) while maintaining said controlled attitude.

2. Method as claimed in claim 1, wherein the action of controlling said downward stroke includes:
detecting said horizontal deviation (S);
comparing said detected horizontal deviation with said maximum threshold value;
performing an adjustment stroke of said gripping device (13) along at least one horizontal axis (X, Y) if the horizontal deviation detected is greater than said maximum threshold value, in order to reduce the horizontal deviation detected.

3. Method as claimed in claim 2, wherein the action of detecting said horizontal deviation (S) is carried out by using a lower reference (28) that identifies said vertical axis of symmetry (K) of the selected loading basket (24a) and an upper reference (20) carried by said gripping device (13) and arranged so as to define said longitudinal axis (A) of the green tyre.

4. Method as claimed in claim 2, wherein the horizontal deviation is detected during a slowing down or stopping step of the gripping device (13) along the downward stroke.

5. Method as claimed in claim 2 or 4, wherein the horizontal deviation is detected starting from a predetermined height with respect to the selected loading basket (24a).

6. Method as claimed in one or more of the preceding claims, comprising:
i) automatically performing said subsequent process(es) after reaching said controlled attitude in said loading position; or
ii) generating an incorrect attitude signal as a result of the failure to achieve said controlled attitude in said loading position.

7. Method as claimed in claim 6, wherein action i) comprises automatically loading the green tyre from said loading position in a respective vulcanisation mould (23) or automatically activating said treatment of the surface of the green tyre (100).

8. Method as claimed in claim 6, wherein said incorrect attitude signal inhibits action i).

9. Plant for producing tyres comprising an apparatus for handling built green tyres (100);
at least one storage (3) of green tyres (100);
at least one of the following:
- a moulding and vulcanisation line (4);
- an intermediate working station (4a) for the treatment of the surface of the green tyre (100);
and a plurality of loading baskets (24), each loading basket of said plurality of loading baskets being associated to the moulding and vulcanisation line or to the intermediate working station, said apparatus comprising:
a transfer device (11) comprising a gripping device (13) for transferring each green tyre (100) to a selected loading basket (24a) between said plurality of loading baskets (24), each loading basket (24) having frustoconical shape and having a vertical axis of symmetry (K);
- wherein said green tyre (100) transferred in said selected loading basket (24a) and resting therein at at least a lateral portion thereof, defines a loading position of the green tyre;
- wherein said gripping device (13) is configured for retaining said green tyre (100) with a longitudinal axis (A) thereof arranged vertically, and for releasing it by depositing it in said selected loading basket (24a);
- a control unit (30) programmed for:
- handling said gripping device (13) along a predetermined stroke line along a first horizontal axis (X) up to reaching a predetermined transfer position (27) overlying the selected loading basket (24a) at a predetermined height with respect to it;
- commanding the handling of said gripping device (13) according to a vertical axis (Z) by performing a downward stroke towards said selected loading basket (24a) from said predetermined transfer position (27); and **characterised by**
- controlling said downward stroke by adjusting a deviation (S) between the longitudinal axis (A) of the green tyre and the vertical axis of symmetry (K) of said selected loading basket (24a) to obtain a controlled attitude of said green tyre in said loading position at the end of said controlled downward stroke in which said deviation (S) is lower than a predetermined maximum threshold value.

10. Plant as claimed in claim 9, wherein said moulding and vulcanisation line (4) comprises a plurality of vulcanisation moulds (23) wherein each vulcanisation mould (23) is associated with a respective loading basket (24) of said plurality of loading baskets.

11. Plant as claimed in claim 9, wherein said control unit (30) is programmed during the action of controlling said downward stroke for:
detecting said horizontal deviation (S);
comparing the detected horizontal deviation with said maximum threshold value;
activating an adjustment stroke of said gripping device (13) along at least one horizontal axis (X, Y) if the horizontal deviation detected is greater than said maximum threshold value, in order to reduce the horizontal deviation detected,
the plant comprising:
- a lower reference (28) associated with each loading basket (24) so as to define said vertical axis of symmetry (K),
- an upper reference (20) carried by said gripping device (13) and arranged so as to define said longitudinal axis (A) of the green tyre,
wherein said control unit (30) is programmed for detecting said horizontal deviation (S) by using the lower reference (28) of the selected loading basket (24a) and said upper reference (20).

12. Plant as claimed in claim 11, wherein said upper reference (20) comprises a detection device integral to the gripping device (13) and said lower reference (28) comprises a reference element integral to each loading basket (24) and detectable by said detection device.

13. Plant as claimed in claim 12, wherein said gripping device (13) comprises a plurality of blades (14) arranged circumferentially and wherein said detection device is arranged along the substantial vertical axis of symmetry of said gripping device (13).

14. Plant as claimed in one or more of claims 12-13, wherein the detection device is arranged so that a detection field (21) of the detection device itself is facing downwards.

15. Plant as claimed in one or more of claims 12-14, comprising a lighting device (22) having annular shape and arranged around the detection device.

## Patentansprüche

1. Verfahren zum Handhaben eines aufgebauten Reifenrohlings (100) für einen nachfolgenden Prozess, wobei der nachfolgende Prozess mindestens einen der folgenden Prozesse umfasst:
Formung und Vulkanisation;
Behandlung der Oberfläche des Reifenrohlings;
wobei eine Ladeposition des Reifenrohlings durch Abstützen mindestens eines seitlichen Abschnitts des Reifenrohlings innerhalb eines aus einer Vielzahl von Ladekörben (24) ausgewählten Ladekorbs (24a) erhalten wird, wobei jeder Ladekorb (24) eine Kegelstumpfform und eine vertikale Symmetrieachse (K) aufweist;
wobei das Verfahren umfasst:
- Anordnen des Reifenrohlings (100) in einer Überführungsvorrichtung (11), die eine Greifvorrichtung (13) umfasst, um ihn in den ausgewählten Ladekorb (24a) zu überführen;
- Handhaben der Greifvorrichtung (13) entlang einer vorbestimmten Hublinie, wobei die Greifvorrichtung (13), während sie den Reifenrohling (100) trägt, dessen Längsachse (A) vertikal angeordnet ist, längs einer ersten horizontalen Achse (X) bis zu einer vorbestimmten Übergabeposition (27) gehandhabt wird, die über dem ausgewählten Ladekorb (24a) in einer vorbestimmten Höhe in Bezug auf diesen liegt;
- Handhaben der Greifvorrichtung (13) entsprechend einer vertikalen Achse (Z) durch Ausführen eines Abwärtshubs von der vorbestimmten Übergabeposition (27) auf den ausgewählten Ladekorb (24a) zu;
**gekennzeichnet durch**
- Regeln des Abwärtshubs durch Einstellen einer Abweichung (S) zwischen der Längsachse (A) des Reifenrohlings und der vertikalen Symmetrieachse des ausgewählten Ladekorbs (24a), um am Ende des geregelten Abwärtshubs eine kontrollierte Lage des Reifenrohlings an der Ladeposition zu erhalten, in der die Abweichung (S) kleiner als ein vorbestimmter Maximum-Schwellenwert ist;
- Durchführen eines solchen Folgeprozesses/solcher Folgeprozesse unter Beibehaltung der kontrollierten Lage.

2. Verfahren nach Anspruch 1, wobei der Vorgang der Regelung des Abwärtshubs Folgendes einschließt:
Ermitteln der horizontalen Abweichung (S);
Vergleichen der ermittelten horizontalen Abweichung mit dem Maximum-Schwellenwert;
Ausführen eines Einstellhubs der Greifvorrichtung (13) entlang mindestens einer horizontalen Achse (X, Y), wenn die ermittelte horizontale Abweichung größer als der Maximum-Schwellenwert ist, um die ermittelte horizontale Abweichung zu verringern.

3. Verfahren nach Anspruch 2, wobei der Vorgang der Ermittlung der horizontalen Abweichung (S) unter Verwendung einer unteren Referenz (28), die die vertikale Symmetrieachse (K) des ausgewählten Ladekorbs (24a) angibt, und einer oberen Referenz (20), die von der Greifvorrichtung (13) getragen wird und so angeordnet ist, dass sie die Längsachse (A) des Reifenrohlings definiert, durchgeführt wird.

4. Verfahren nach Anspruch 2, wobei die horizontale Abweichung während eines Abbrems- oder Anhalteschritts der Greifvorrichtung (13) entlang des Abwärtshubs ermittelt wird.

5. Verfahren nach Anspruch 2 oder 4, wobei die horizontale Abweichung ausgehend von einer vorbestimmten Höhe in Bezug auf den ausgewählten Ladekorb (24a) ermittelt wird.

6. Verfahren nach einem oder mehreren der vorhergehenden Ansprüche, umfassend:
i) selbsttätiges Ausführen des Folgeprozesses/der Folgeprozesse nach Erreichen der kontrollierten Lage an der Ladeposition oder
ii) Erzeugen eines Falsche-Lage-Signals infolge des Nichterreichens der kontrollierten Lage an der Ladeposition.

7. Verfahren nach Anspruch 6, wobei der Vorgang i) ein selbsttätiges Laden des Reifenrohlings aus der Ladeposition in eine jeweilige Vulkanisationsform (23) oder ein selbsttätiges Aktivieren der Behandlung der Oberfläche des Reifenrohlings (100) umfasst.

8. Verfahren nach Anspruch 6, wobei das Falsche-LageSignal den Vorgang i) sperrt.

9. Anlage zur Herstellung von Reifen, umfassend eine Vorrichtung zur Handhabung von aufgebauten Reifenrohlingen (100) ;
mindestens ein Lager (3) für Reifenrohlinge (100); mindestens eine von
- einer Formungs- und Vulkanisationslinie (4);
- einer zwischengeschalteten Bearbeitungsstation (4a) für die Behandlung der Oberfläche des Reifenrohlings (100);
und eine Vielzahl von Ladekörben (24), wobei jeder Ladekorb der Vielzahl von Ladekörben der Formungs- und Vulkanisationslinie oder der zwischengeschalteten Bearbeitungsstation zugeordnet ist,
wobei die Vorrichtung umfasst:
eine Überführungsvorrichtung (11), umfassend eine Greifvorrichtung (13) zum Überführen jedes Reifenrohlings (100) in einen aus der Vielzahl von Ladekörben (24) ausgewählten Ladekorb (24a), wobei jeder Ladekorb (24) eine Kegelstumpfform und eine vertikale Symmetrieachse (K) aufweist;
- wobei der Reifenrohling (100), der in den ausgewählten Ladekorb (24a) überführt wird und darin an mindestens einem seitlichen Abschnitt davon liegt, eine Ladeposition des Reifenrohlings definiert;
- wobei die Greifvorrichtung (13) dafür ausgelegt ist, den Reifenrohling (100) bei vertikal angeordneter Längsachse (A) desselben festzuhalten und ihn durch Ablegen in dem ausgewählten Ladekorb (24a) freizugeben;
eine Steuereinheit (30), die programmiert ist zum
- Handhaben der Greifvorrichtung (13) entlang einer vorbestimmten Hublinie längs einer ersten horizontalen Achse (X) bis zum Erreichen einer vorbestimmten Übergabeposition (27), die über dem ausgewählten Ladekorb (24a) in einer vorbestimmten Höhe in Bezug auf diesen liegt;
- Steuern der Handhabung der Greifvorrichtung (13) entsprechend einer vertikalen Achse (Z) durch Ausführen eines Abwärtshubs von der vorbestimmten Übergabeposition (27) auf den ausgewählten Ladekorb (24a) zu;
und **gekennzeichnet ist durch**
- Regeln des Abwärtshubs durch Einstellen einer Abweichung (S) zwischen der Längsachse (A) des Reifenrohlings und der vertikalen Symmetrieachse (K) des ausgewählten Ladekorbs (24a), um am Ende des geregelten Abwärtshubs eine kontrollierte Lage des Reifenrohlings in der Ladeposition zu erhalten, in der die Abweichung (S) kleiner als ein vorbestimmter Maximum-Schwellenwert ist.

10. Anlage nach Anspruch 9, wobei die Formungs- und Vulkanisationslinie (4) eine Vielzahl von Vulkanisationsformen (23) umfasst, wobei jeder Vulkanisationsform (23) ein entsprechender Ladekorb (24) der Vielzahl von Ladekörben zugeordnet ist.

11. Anlage nach Anspruch 9, wobei die Steuereinheit (30) während des Vorgangs der Regelung des Abwärtshubs dafür programmiert ist,
die horizontale Abweichung (S) zu ermitteln;
die ermittelte horizontale Abweichung mit dem Maximum-Schwellenwert zu vergleichen;
einen Einstellhub der Greifvorrichtung (13) längs mindestens einer horizontalen Achse (X, Y) auszulösen, wenn die ermittelte horizontale Abweichung größer als der Maximum-Schwellenwert ist, um die ermittelte horizontale Abweichung zu verringern,
wobei die Anlage umfasst:
- eine untere Referenz (28), die jedem Ladekorb (24) zugeordnet ist, um die vertikale Symmetrieachse (K) zu definieren,
- eine obere Referenz (20), die von der Greifvorrichtung (13) getragen wird und so angeordnet ist, dass sie die Längsachse (A) des Reifenrohlings definiert,
wobei die Steuereinheit (30) dafür programmiert ist, die horizontale Abweichung (S) unter Verwendung der unteren Referenz (28) des ausgewählten Ladekorbs (24a) und der oberen Referenz (20) zu ermitteln.

12. Anlage nach Anspruch 11, wobei die obere Referenz (20) eine mit der Greifvorrichtung (13) integrierte Erfassungsvorrichtung umfasst und die untere Referenz (28) ein mit jedem Ladekorb (24) integriertes und mittels der Erfassungsvorrichtung erfassbares Referenzelement umfasst.

13. Anlage nach Anspruch 12, wobei die Greifvorrichtung (13) eine Vielzahl von Lamellen (14) umfasst, die in Umfangsrichtung angeordnet sind, und wobei die Erfassungsvorrichtung entlang der im Wesentlichen vertikalen Symmetrieachse der Greifvorrichtung (13) angeordnet ist.

14. Anlage nach einem oder mehreren der Ansprüche 12 bis 13, wobei die Erfassungsvorrichtung so angeordnet ist, dass ein Erfassungsfeld (21) der Erfassungsvorrichtung an sich nach unten gerichtet ist.

15. Anlage nach einem oder mehreren der Ansprüche 12 bis 14, umfassend eine Beleuchtungsvorrichtung (22), die eine Ringform aufweist und um die Erfassungsvorrichtung herum angeordnet ist.

## Revendications

1. Procédé de manipulation d'un pneu cru construit (100) pour un processus ultérieur, ledit processus ultérieur comprenant au moins l'un des suivants :
un moulage et une vulcanisation ;
un traitement de la surface de pneu cru ;
dans lequel une position de chargement du pneu cru est obtenue en supportant au moins une partie latérale du pneu cru dans un panier de chargement sélectionné (24a) entre une pluralité de paniers de chargement (24), chaque panier de chargement (24) ayant une forme tronconique et ayant un axe de symétrie vertical (K) ;
ledit procédé comprenant les étapes consistant :
- à agencer ledit pneu cru (100) dans un dispositif de transfert (11) comprenant un dispositif de saisie (13), pour le transférer audit panier de chargement sélectionné (24a) ;
- à manipuler ledit dispositif de saisie (13) le long d'une ligne de course prédéterminée dans laquelle ledit dispositif de saisie (13) portant ledit pneu cru (100), avec un axe longitudinal (A) de celui-ci agencé verticalement, est manipulé le long d'un premier axe horizontal (X) jusqu'à une position de transfert prédéterminée (27) recouvrant le panier de chargement sélectionné (24a) à une hauteur prédéterminée par rapport à celui-ci ;
- à manipuler ledit dispositif de saisie (13) selon un axe vertical (Z) en effectuant une course descendante vers ledit panier de chargement sélectionné (24a) à partir de ladite position de transfert prédéterminée (27) ; **caractérisé par** les étapes consistant
- à réguler ladite course descendante en ajustant un écart (S) entre l'axe longitudinal (A) du pneu cru et l'axe de symétrie vertical dudit panier de chargement sélectionné (24a) pour obtenir une attitude régulée dudit pneu cru dans ladite position de chargement à la fin de ladite course descendante régulée dans laquelle ledit écart (S) est inférieur à une valeur seuil maximale prédéterminée ;
- à effectuer un/de tel(s) processus ultérieur(s) tout en maintenant ladite attitude régulée.

2. Procédé tel que revendiqué dans la revendication 1, dans lequel l'action de régulation de ladite course descendante comporte les étapes consistant :
à détecter ledit écart horizontal (S) ;
à comparer ledit écart horizontal détecté à la valeur seuil maximale ;
à effectuer une course de réglage dudit dispositif de saisie (13) le long d'au moins un axe horizontal (X, Y) si l'écart horizontal détecté est supérieur à ladite valeur seuil maximale, afin de réduire l'écart horizontal détecté.

3. Procédé tel que revendiqué dans la revendication 2, dans lequel l'action de détection dudit écart horizontal (S) est effectuée en utilisant une référence inférieure (28) qui identifie ledit axe de symétrie vertical (K) du panier de chargement sélectionné (24a) et une référence supérieure (20) portée par ledit dispositif de saisie (13) et agencée de manière à définir ledit axe longitudinal (A) du pneu cru.

4. Procédé tel que revendiqué dans la revendication 2, dans lequel l'écart horizontal est détecté lors d'une étape de ralentissement ou d'arrêt du dispositif de saisie (13) le long de la course descendante.

5. Procédé tel que revendiqué dans la revendication 2 ou 4, dans lequel l'écart horizontal est détecté à partir d'une hauteur prédéterminée par rapport au panier de chargement sélectionné (24a).

6. Procédé tel que revendiqué dans une ou plusieurs des revendications précédentes, comprenant les étapes consistant :
i) à effectuer automatiquement ledit/lesdits processus ultérieur(s) après avoir atteint ladite attitude régulée dans ladite position de chargement ; ou
ii) à générer un signal d'attitude incorrecte suite à l'échec à atteindre ladite attitude régulée dans ladite position de chargement.

7. Procédé tel que revendiqué dans la revendication 6, dans lequel l'action i) comprend le chargement automatique du pneu cru à partir de ladite position de chargement dans un moule de vulcanisation respectif (23) ou l'activation automatique dudit traitement de la surface du pneu cru (100).

8. Procédé tel que revendiqué dans la revendication 6, dans lequel ledit signal d'attitude incorrecte inhibe l'action i).

9. Installation de fabrication de pneus comprenant un appareil de manipulation de pneus crus construits (100) ;
au moins un stockage (3) de pneus crus (100) ;
au moins l'un des éléments suivants :
- une ligne de moulage et de vulcanisation (4) ;
- un poste de travail intermédiaire (4a) pour le traitement de la surface du pneu cru (100) ;
et une pluralité de paniers de chargement (24), chaque panier de chargement de ladite pluralité de paniers de chargement étant associé à la ligne de moulage et de vulcanisation ou au poste de travail intermédiaire,
ledit appareil comprenant :
un dispositif de transfert (11) comprenant un dispositif de saisie (13) pour transférer chaque pneu cru (100) à un panier de chargement sélectionné (24a) entre ladite pluralité de paniers de chargement (24), chaque panier de chargement (24) ayant une forme tronconique et ayant un axe de symétrie vertical (K) ;
- dans lequel ledit pneu cru (100) transféré dans ledit panier de chargement sélectionné (24a) et reposant dans celui-ci à au moins une partie latérale de celui-ci, définit une position de chargement du pneu cru ;
- où ledit dispositif de saisie (13) est configuré pour retenir ledit pneu cru (100) avec un axe longitudinal (A) de celui-ci agencé verticalement, et pour le libérer en le déposant dans ledit panier de chargement sélectionné (24a) ;
- une unité de commande (30) programmée pour :
- manipuler ledit dispositif de saisie (13) le long d'une ligne de course prédéterminée le long d'un premier axe horizontal (X) jusqu'à atteindre une position de transfert prédéterminée (27) recouvrant le panier de chargement sélectionné (24a) à une hauteur prédéterminée par rapport à celui-ci ;
- commander la manipulation dudit dispositif de saisie (13) selon un axe vertical (Z) en effectuant une course descendante vers ledit panier de chargement sélectionné (24a) à partir de ladite position de transfert prédéterminée (27) ; et **caractérisée par** le fait
- de réguler ladite course descendante en ajustant un écart (S) entre l'axe longitudinal (A) du pneu cru et l'axe de symétrie vertical (K) dudit panier de chargement sélectionné (24a) pour obtenir une attitude régulée dudit pneu cru dans ladite position de chargement à la fin de ladite course descendante régulée dans laquelle ledit écart (S) est inférieur à une valeur seuil maximale prédéterminée.

10. Installation telle que revendiquée dans la revendication 9, dans laquelle ladite ligne de moulage et de vulcanisation (4) comprend une pluralité de moules de vulcanisation (23) où chaque moule de vulcanisation (23) est associé à un panier de chargement respectif (24) de ladite pluralité de paniers de chargement.

11. Installation telle que revendiquée dans la revendication 9, dans laquelle ladite unité de commande (30) est programmée lors de l'action de régulation de ladite course descendante pour :
détecter ledit écart horizontal (S) ;
comparer l'écart horizontal détecté à ladite valeur seuil maximale ;
activer une course de réglage dudit dispositif de saisie (13) le long d'au moins un axe horizontal (X, Y) si l'écart horizontal détecté est supérieur à ladite valeur seuil maximale, afin de réduire l'écart horizontal détecté,
l'installation comprenant :
- une référence inférieure (28) associée à chaque panier de chargement (24) de manière à définir ledit axe de symétrie vertical (K),
- une référence supérieure (20) portée par ledit dispositif de saisie (13) et agencée de manière à définir ledit axe longitudinal (A) du pneu cru,
où ladite unité de commande (30) est programmée pour détecter ledit écart horizontal (S) en utilisant la référence inférieure (28) du panier de chargement sélectionné (24a) et ladite référence supérieure (20).

12. Installation telle que revendiquée dans la revendication 11, dans laquelle ladite référence supérieure (20) comprend un dispositif de détection solidaire du dispositif de saisie (13) et ladite référence inférieure (28) comprend un élément de référence solidaire de chaque panier de chargement (24) et pouvant être détecté par ledit dispositif de détection.

13. Installation telle que revendiquée dans la revendication 12, dans laquelle ledit dispositif de saisie (13) comprend une pluralité de lames (14) agencées de manière circonférentielle et où ledit dispositif de détection est agencé le long de l'axe de symétrie sensiblement vertical dudit dispositif de saisie (13).

14. Installation telle que revendiquée dans une ou plusieurs des revendications 12 et 13, dans laquelle le dispositif de détection est agencé de sorte qu'un champ de détection (21) du dispositif de détection lui-même soit orienté vers le bas.

15. Installation telle que revendiquée dans une ou plusieurs des revendications 12 à 14, comprenant un dispositif d'éclairage (22) ayant une forme annulaire et agencé autour dispositif de détection.
